# FASCICULE DE BREVET EUROPEEN

(11) **EP 3 439 896 B1**
(45) Date de publication et mention de la délivrance du brevet: **12.08.2020**
(21) Numéro de dépôt: 17717802.7
(22) Date de dépôt: 31.03.2017
(51) Int. Cl.: B60C 9/07, B60C 9/02

(54) **ARMATURE DE CARCASSE DE PNEUMATIQUE POUR VÉHICULE A DEUX ROUES**
REIFENKARKASSENVERSTÄRKUNG FÜR EIN ZWEIRADFAHRZEUG
TYRE CARCASS REINFORCEMENT FOR A TWO-WHEELED VEHICLE

(30) Priorité: 05.04.2016 FR 1652975
(43) Date de publication de la demande: 13.02.2019
(73) Titulaire: Compagnie Générale des Etablissements Michelin, 63000 Clermont-Ferrand (FR)
(72) Inventeur: GUICHERD, Charles, 63040 Clermont-Ferrand Cedex 9 (FR); PRECIGOUT, Mickaël, 63040 Clermont-Ferrand Cedex 9 (FR); BOUCHET, Romain, 63040 Clermont-Ferrand Cedex 9 (FR); LAURENT, Christophe, 63040 Clermont-Ferrand Cedex 9 (FR)
(74) Mandataire: Lasson, Cédric Yves
(86) Numéro de dépôt international: PCT/FR2017/050750
(87) Numéro de publication internationale: WO 2017/174904

(56) Documents cités:
- WO-A1-02/053634
- WO-A1-2014/001379
- DE-A1- 2 164 366
- JP-A- 2001 138 707

## Description

L'invention concerne un pneumatique radial destiné à équiper un véhicule motorisé à deux roues, tel qu'une motocyclette ou moto.

Bien que non limitée à une telle application, l'invention sera décrite plus particulièrement en référence à un pneumatique radial destiné à être monté à l'arrière d'une moto.

Dans ce qui suit, et par convention, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique. Les angles, par rapport à la direction circonférentielle, mentionnés dans ce qui suit, ne sont pas orientés et sont indiqués en valeur absolue.

Un pneumatique comprend une bande de roulement, destinée à venir en contact avec le sol par l'intermédiaire de la surface de roulement, et reliée par l'intermédiaire de deux flancs à deux bourrelets, assurant la liaison mécanique entre le pneumatique et la jante sur laquelle il est monté.

Un pneumatique radial comprend également une armature de renforcement, comprenant une armature de sommet, radialement intérieure à la bande de roulement, et une armature de carcasse, le plus souvent radialement intérieure à l'armature de sommet.

L'armature de sommet d'un pneumatique radial pour moto comprend généralement au moins une couche de sommet constituée de renforts enrobés dans un matériau polymérique de type élastomère. Les renforts sont le plus souvent constitués d'un matériau textile, tel que l'aramide, mais peuvent être également métalliques. Différentes architectures d'armature de sommet ont été proposées par l'homme du métier, selon que le pneumatique est destiné à une monte à l'avant ou à une monte à l'arrière de la moto. Cependant, l'armature de sommet est constitué le plus souvent d'une couche de sommet circonférentielle, comprenant des renforts circonférentiels, c'est-à-dire formant, avec la direction circonférentielle, un angle sensiblement nul, au plus égal à 5°.

L'armature de carcasse d'un pneumatique radial pour moto comprend soit une couche de carcasse formant sur toute sa longueur avec la direction circonférentielle un angle de 90° à plus ou moins 5 degrés, soit plusieurs couches de carcasse formant avec la direction circonférentielle un angle supérieur à 65° avec une valeur minimale atteinte au milieu de la surface de roulement.

Une couche de carcasse est dite retournée, lorsqu'elle comprend une partie principale, reliant les deux bourrelets entre eux et s'enroule, dans chaque bourrelet, de l'intérieur vers l'extérieur du pneumatique autour d'une tringle, pour former un retournement ayant une extrémité libre. La tringle est un élément de renforcement circonférentiel, le plus souvent métallique et enrobé dans un matériau généralement élastomérique ou textile. Dans le cas d'une couche de carcasse retournée, le retournement, dans chaque bourrelet, permet l'ancrage de la couche de carcasse retournée à la tringle. La portion de tringle en contact avec la couche de carcasse retournée contribue, en particulier au gonflage, à la reprise par couplage des efforts de tension dans la couche de carcasse retournée. Cette contribution à la reprise d'efforts de tension dépend de la rigidité de torsion de la tringle et de la géométrie du retournement. Dans le cas d'une forte rigidité de torsion de la tringle, les efforts de tension au gonflage sont essentiellement repris par la tringle, avec une contribution secondaire du retournement. Dans le cas d'une plus faible rigidité de torsion de la tringle, les efforts de tension sont repris à la fois par couplage avec la tringle et par cisaillement entre le retournement et les matériaux qui lui sont adjacents, ce qui nécessite un retournement suffisamment long, c'est-à-dire dont l'extrémité est suffisamment radialement éloignée du point le plus radialement intérieur de la tringle. Un retournement est dit long lorsque la distance radiale entre son extrémité et le point le plus radialement intérieur de la tringle est au moins égale à 0.3 fois la hauteur de section théorique du pneumatique telle que définie par les normes de la European Tyre and Rim Technical Organisation ou ETRTO.

Une couche de carcasse est non retournée, lorsqu'elle est constituée uniquement d'une partie principale, reliant les deux bourrelets entre eux, sans s'enrouler autour d'une tringle. Dans le cas d'une couche de carcasse non retournée, chacune des deux portions d'extrémités de ladite couche de carcasse non retournée peut être couplée soit avec le retournement d'au moins une couche de carcasse retournée, soit avec la partie principale d'au moins une couche de carcasse retournée. Par couplage, on entend une zone de recouvrement entre la couche de carcasse non retournée et une couche de carcasse retournée, permettant une reprise des efforts de tension par cisaillement.

Les renforts de la partie principale d'une couche de carcasse retournée ou non retournée sont sensiblement parallèles entre eux et forment, avec la direction circonférentielle, un angle compris entre 65° et 90°.

Une première architecture connue de pneumatique radial pour monte à l'arrière d'une moto comprend une armature de carcasse, constituée d'une couche de carcasse retournée et d'une couche de carcasse non retournée, radialement intérieure à une armature de sommet, constituée d'une couche de sommet circonférentielle. La couche de carcasse non retournée est radialement extérieure à la partie principale de la couche de carcasse retournée mais radialement intérieure au retournement de la couche de carcasse retournée. L'extrémité de retournement de la carcasse retournée est radialement intérieure à l'extrémité de la couche de sommet circonférentielle, ce qui implique qu'il n'y a pas de recouvrement entre le retournement de la couche de carcasse retournée et la couche de sommet circonférentielle. Les renforts respectifs de la couche de carcasse retournée et de la couche de carcasse non retournée forment, avec la direction circonférentielle, des angles sensiblement égaux en valeur absolue, de signe opposé et compris entre 85° et 90°. Une telle architecture, du fait du couplage entre la couche de carcasse radiale et la couche de sommet circonférentielle, dans la zone de sommet du pneumatique, garantit une stabilité satisfaisante de la moto dans une trajectoire en ligne droite. Dans une trajectoire en ligne droite, un grand nombre de motos peut atteindre des vitesses dépassant les 200km/h.

Une deuxième architecture connue de pneumatique radial pour monte à l'arrière d'une moto comprend une armature de carcasse, constituée d'une couche de carcasse retournée, et d'une couche de carcasse non retournée, radialement intérieure à une armature de sommet, constituée d'une couche de sommet circonférentielle. La couche de carcasse non retournée est radialement extérieure à la partie principale de la couche de carcasse retournée mais radialement intérieure au retournement de la couche de carcasse retournée. L'extrémité de retournement de la carcasse retournée est radialement intérieure à l'extrémité de la couche de sommet circonférentielle, ce qui implique qu'il n'y a pas de recouvrement entre le retournement de la couche de carcasse retournée et la couche de sommet circonférentielle. Les renforts respectifs de la couche de carcasse retournée et de la couche de carcasse non retournée forment, avec la direction circonférentielle, des angles sensiblement égaux en valeur absolue, de signe opposé et compris entre 65° et 85°. Une telle architecture, du fait de l'effet de triangulation résultant du croisement des renforts d'une couche de carcasse à l'autre, en particulier dans les flancs, garantit une stabilité satisfaisante de la moto dans une trajectoire en courbe. L'angle de carrossage du pneumatique arrière, entre le plan équatorial du pneumatique et le plan perpendiculaire au sol et tangent à la trajectoire, est usuellement supérieur à 20° et peut aller jusqu'à 60° dans une trajectoire courbe.

Le document D1 (WO2014001379A1) décrit un pneumatique selon l'état de la technique.

Les inventeurs se sont donnés pour objectif de concevoir une armature de carcasse de pneumatique radial pour une monte à l'arrière d'une moto, permettant de garantir une stabilité satisfaisante de la moto aussi bien dans une trajectoire en ligne droite à haute vitesse que dans une trajectoire en courbe à fort angle de carrossage.

Ce but a été atteint, selon l'invention, par un pneumatique pour véhicule motorisé à deux roues de type motocyclette tel que défini dans la revendication 1.

Le choix de la variation d'angle des renforts de la portion latérale permet d'ajuster la rigidité de la portion d'armature de carcasse à l'aplomb de la surface de contact au sol, en courbe et à fort carrossage, au moins égal à 30°, de façon à obtenir une stabilité de la moto optimale en courbe. En outre, la variation d'angle des renforts de la portion latérale dépend de l'angle sensiblement constant, choisi pour les renforts de la portion sommitale.

On définit la demi-largeur boudin nominale L (ou grosseur boudin) par la demi-largeur boudin d'un pneumatique monté sur jante et gonflé.

Par module d'élasticité d'un matériau, on entend le module d'extension sécant obtenu en traction selon la norme ASTM D 412 de 1998 (éprouvette « C ») : on mesure en seconde élongation (c'est-à-dire après un cycle d'accommodation) les modules sécants apparents à 10% d'allongement, notés « MA 10 » et exprimés en MPa (conditions normales de températures et d'hygrométrie selon la norme ASTM D 1349 de 1999). Ce module d'élasticité est à distinguer des modules d'élasticité obtenus en compression et dont les valeurs sont en général sans rapport avec les modules obtenus en extension.

La portion sommitale est disposée radialement à l'intérieur de l'armature de sommet et ses extrémités sont axialement intérieures aux extrémités de la surface de roulement, c'est-à-dire que la largeur axiale de la portion sommitale est inférieure à la largeur axiale de la bande de roulement.

L'angulation des renforts de la portion sommitale, dite sensiblement radiale, entraine une faible rigidité de dérive du pneumatique. La rigidité de dérive est la force latérale générée par le pneumatique ou poussée de dérive, lorsqu'on lui applique un angle de dérive de 1°, l'angle de dérive étant l'angle formé par la droite, intersection du plan équatorial du pneumatique avec sol, et la droite tangente à la trajectoire. Cette angulation sensiblement radiale contribue ainsi à obtenir un sommet souple générant une faible poussée de dérive, ce qui contribue à garantir une bonne stabilité de la moto dans une trajectoire en ligne droite.

Le croisement des renforts respectifs de la portion latérale et du retournement entraîne une forte rigidité de dérive du pneumatique, lorsque le pneumatique, dans une trajectoire en courbe, a un angle de carrossage élevé, au moins égal à 30°. L'angle de carrossage est l'angle formé par le plan équatorial du pneumatique avec le plan perpendiculaire au sol et tangent à la trajectoire. A fort carrossage, la portion d'armature de carcasse constituée par la portion latérale et le retournement est à l'aplomb de la surface de contact du pneumatique avec le sol. Par conséquent, la portion de pneumatique en contact avec le sol a une rigidité relativement élevée. Le pneumatique génère alors une forte poussée, ce qui garantit une bonne stabilité de la moto dans une trajectoire en courbe.

Ainsi l'existence de deux portions de couche de carcasse, respectivement sensiblement radiale au sommet et croisée avec le retournement au flanc, permet de garantir une bonne stabilité de la moto, respectivement en ligne droite, à angle de carrossage nul, et en courbe, à angle de carrossage élevé au moins égal à 30°.

De préférence, la bande de roulement comprend une première partie P₁ et une seconde partie P₂ juxtaposées en une cinquième extrémité E₅ commune auxdites parties, lesdites parties P₁ et P₂ étant disposées symétriquement par rapport au plan équatorial, ladite première partie P₁ étant centrale et ayant une demi-largeur axiale L₀ comprise entre le plan équatorial P et l'extrémité E₅ au moins égale à (0.55)L et au plus égal à (0.8)L et comprenant une première couche de composition élastomère centrale C₁, ladite seconde partie étant latérale et ayant une demi-largeur L₁ disposée entre l'extrémité E₅ et l'extrémité axiale de la grosseur boudin nominale L et égale à L-L₀ et comprenant la première couche de composition élastomère C₁ radialement intérieure à une seconde couche de composition élastomère C₂.

De préférence, la première couche de composition élastomère C₁ présente un module de rigidité MA10 à 10% d'élongation compris entre 3,5 et 5 MPa et un module de rigidité MA100 à 100% d'élongation compris entre 1 et 1,7 MPa.

De préférence, la seconde couche de composition élastomère C₂ présente un module de rigidité MA10 à 10% d'élongation compris entre 2.5 et 4 MPa et un module de rigidité MA100 à 100% d'élongation compris entre 1 et 1,3 MPa.

De préférence, la première couche de composition élastomère C₁ représente entre 0.65 et 0.8 fois le volume total de la bande de roulement.

De préférence, la couche de composition élastomère de découplage C₃ a une épaisseur supérieure à 0,7M, M étant l'épaisseur de la couche de renfort de l'armature de carcasse.

De préférence, l'angle A₁ sensiblement constant, formé, avec la direction circonférentielle X, par les renforts de la portion sommitale, est au moins égal à 80°.

De préférence, la portion sommitale a une largeur axiale L₃ au moins égale à 0.7 fois et au plus égale à 0.85 fois la largeur axiale L de la demi bande de roulement.

De préférence, l'angle (A₃), formé, avec la direction circonférentielle (X), par les renforts de la portion latérale (612), croît à partir d'un angle minimal, compris entre 55° et 70° à l'extrémité E₂, jusqu'à un angle maximal, compris entre 70° et 80° à l'extrémité E₄.

De préférence, la portion latérale a une hauteur radiale H₂, H₂ étant la hauteur radiale entre les extrémités E₂ et le point de l'extrémité du bourrelet le plus radialement intérieur, au moins égale à 0,55 fois et au plus égale à 0.65 fois la hauteur H de la section méridienne du pneumatique.

Cette hauteur radiale conditionne la largeur axiale de la portion d'armature de carcasse à l'aplomb de la surface de contact au sol, en courbe et à fort carrossage, au moins égal à 30°. Cette caractéristique est un paramètre d'ajustement de la rigidité de dérive pour un roulage en courbe à fort carrossage.

De préférence, les renforts de l'armature de carcasse sont en textile, de préférence en polyester ou en nylon. Les renforts de l'armature de sommet peuvent être en textile, de préférence en aramide.

Avantageusement l'angle sensiblement constant, formé, avec la direction circonférentielle, par les renforts de la portion sommitale est au moins égal à 80°. Un angle au moins égal à 80°, donc proche de 90°, confère une stabilité de la moto optimale en ligne droite.

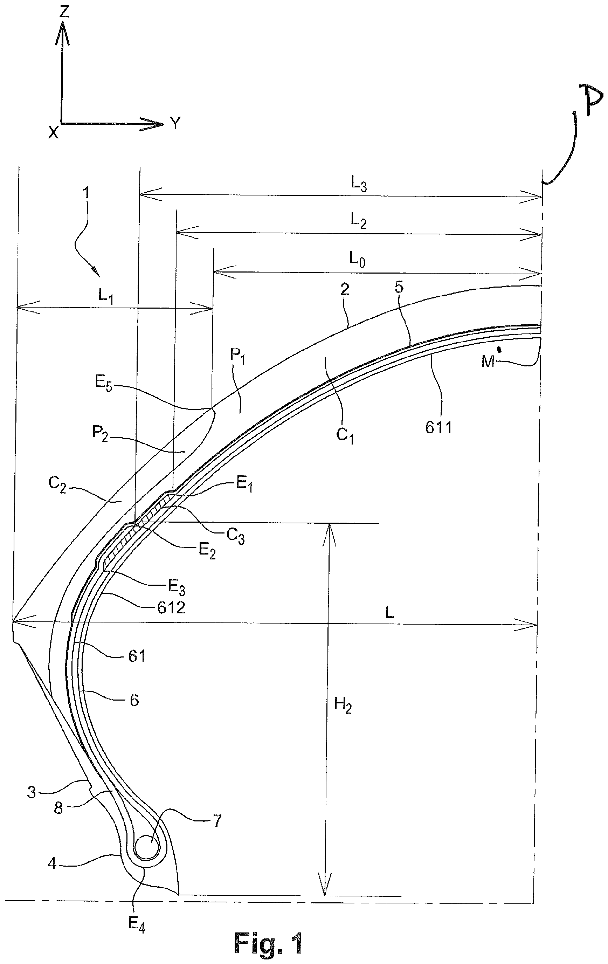

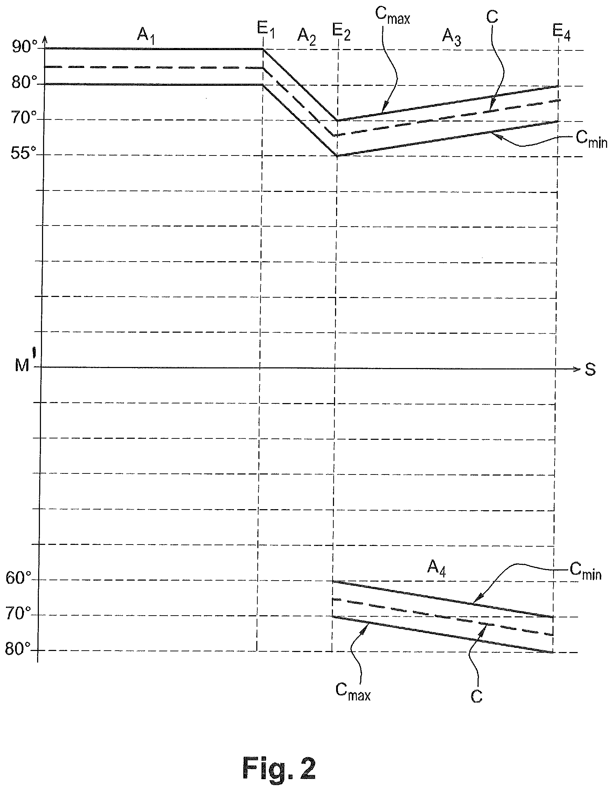

D'autres détails et caractéristiques avantageux de l'invention ressortiront ci-après de la description de l'invention en référence aux figures 1 et 2 et des exemples qui suivent et qui représentent :
- figure 1, une demi coupe méridienne d'un pneumatique, et
- figure 2, le graphique représentant la plage d'évolution de l'angle formé, avec la direction circonférentielle, par les renforts de la couche de carcasse retournée, selon son abscisse curviligne comprise entre le plan équatorial et la tringle.

Les figures 1 et 2 ne sont pas représentées à l'échelle pour en simplifier la compréhension.

La figure 1 représente un pneumatique 1 comprenant une bande de roulement 2, reliée par deux flancs 3 à deux bourrelets 4, une armature de sommet 5, radialement intérieure à la bande de roulement 2, comprenant au moins une couche de sommet, une armature de carcasse 6, radialement intérieure à l'armature de sommet 5, comprenant au moins une couche de carcasse retournée 61. La couche de carcasse retournée 61 au niveau du flanc comprend des renforts parallèles entre eux et s'enroule, dans chaque bourrelet 4, de l'intérieur vers l'extérieur du pneumatique autour d'une tringle 7, pour former un retournement 8 au niveau de la tringle 7.

La portion sommitale 611 de la couche de carcasse retournée 61 s'étend axialement entre une première et une deuxième extrémité E₂ et E'₂ (non représentée), symétriques par rapport au plan équatorial P. La demi-largeur axiale L₃ est comprise entre 0.7 et 0.85 fois la demi largeur axiale L de la bande de roulement, définie entre les deux extrémités axiales de la surface de roulement. La portion sommitale 611 est ainsi centrée par rapport au plan équatorial P du pneumatique, défini par les directions respectivement circonférentielle X et radiale Z.

La portion latérale 612 de la couche de carcasse retournée 61 s'étend, dans le flanc 3, radialement vers l'intérieur, à partir d'une première extrémité E₂ radialement la plus extérieure, jusqu'à une deuxième extrémité E₄ disposée au niveau de la tringle 7. Elle s'étend également axialement à l'intérieur du retournement 8. La hauteur radiale H₂ entre les première et deuxième extrémités E₂ et E₄ est comprise entre 0.55 fois et 0.65 fois la hauteur théorique de section H, mesurée entre le point de la surface de roulement, positionné dans le plan équatorial, et le point le plus radialement intérieur du bourrelet 4.

Le retournement 8 s'étend radialement vers l'extérieur à partir de l'extrémité E₄ radialement la plus intérieure de la portion latérale 612 jusqu'à l'extrémité libre E₂ du retournement 8.

Une couche de composition élastomère de découplage C₃ est disposée entre l'armature de carcasse axialement intérieure et le retournement 8 de l'armature de carcasse à partir de l'extrémité libre E₁ jusqu'à une extrémité E₃. Cette composition élastomère de découplage présente une rigidité comprise entre 5 et 7MPa à 10% d'élongation. L'utilisation de cette composition de découplage permet d'éviter la décohésion de l'armature de carcasse axialement intérieure et du retournement 8 de cette armature de carcasse.

La bande de roulement 2 comprend une première partie P₁ et une seconde partie P2, juxtaposées en une cinquième extrémité E₅. Les parties P₁ et P₂ sont disposées symétriquement par rapport au plan équatorial P.

La partie P₁ est centrale et a une demi-largeur axiale L₀ comprise entre le plan P et l'extrémité E₅ comprise entre 0.55L et 0.65L. Cette partie P₁ comprend une couche unique C₁ de composition élastomère ayant un module de rigidité MA 10 à 10% d'allongement compris entre 3 et 5MPa.

La partie P₂ de demi-largeur L₁ est disposée vers les extrémités axialement extérieures de la bande de roulement. Cette partie P₂ comprend deux couches C₁ et C₂. La première couche C₁ radialement extérieure, a une composition élastomère ayant un module de rigidité MA10 à 10% d'allongement compris entre 3 et 5MPa et un module de rigidité MA 100 à 100% d'allongement compris entre 1 et 1.7MPa. La seconde couche C₂, radialement intérieure, a une composition élastomère ayant un module de rigidité MA10 à 10% d'allongement compris entre 2.5 et 4MPa et un module de rigidité MA 100 à 100% d'allongement compris entre 1 et 1.3MPa.

La proportion en volume de la couche C₁ sur les deux parties P₁ et P₂ par rapport au volume complet de la bande de roulement 2 est compris entre 0.65 et 0.8.

La figure 2 présente la plage d'évolution de l'angle A formé, avec la direction circonférentielle X, par les renforts de la couche de carcasse retournée, en fonction de l'abscisse curviligne s, comprise entre le point M' du plan équatorial et l'extrémité E₁ du retournement. La courbe Cₘₐₓ est la courbe enveloppe d'angle maximal. La courbe Cₘᵢₙ est la courbe enveloppe d'angle minimal. La courbe C est un exemple-type d'évolution de l'angle, en fonction de l'abscisse curviligne le long de la couche de carcasse retournée. Les valeurs positives de l'angle correspondent à l'évolution de l'angle respectivement le long de la portion sommitale et de la portion latérale. Les valeurs négatives de l'angle correspondent à l'évolution de l'angle le long du retournement 8.

La première portion de la plage d'évolution correspond à la partie de la portion sommitale 611 comprise entre les points M' et E₁, pour laquelle les renforts forment, avec la direction circonférentielle X, un angle A₁ sensiblement constant compris entre 80° et 90°.

La deuxième portion de la plage d'évolution correspond à la partie de portion sommitale comprise entre l'extrémité E₁ et l'extrémité E₂, pour laquelle les renforts forment, avec la direction circonférentielle X, un angle A₂ décroissant de l'extrémité E₁ vers l'extrémité E₂.

La troisième portion de la plage d'évolution correspond à la portion latérale 612 comprise entre les extrémités E₂ et E₄, pour laquelle les renforts forment, avec la direction circonférentielle X, un angle A₃ croissant, depuis la première extrémité E₂ radialement la plus extérieure jusqu'à l'extrémité E₄ radialement la plus intérieure, à partir d'un angle inférieur d'au moins 10° à l'angle A₁ sensiblement constant, formé, avec la direction circonférentielle, par les renforts de la portion sommitale 611.

La quatrième portion de la plage d'évolution correspond au retournement 8, pour lequel les renforts forment, avec la direction circonférentielle X, un angle A₄, de signe opposé à l'angle A₃, formé par les renforts de la portion latérale 612. Cet angle A₄ décroît, en valeur absolue, à partir d'un angle maximal, compris entre 70° et 80°, au niveau de l'extrémité E₄ de la portion latérale 612, pour atteindre un angle minimal, compris entre 60° et 70°, au niveau de l'extrémité E₂ du retournement 8.

L'invention a été plus particulièrement étudiée sur les dimensions 180/55 ZR 17 et 190/50 ZR 17. Les valeurs issues de ces dimensions sont rassemblées dans le tableau I ci-dessous.

**Tableau I**

| | 180/55 ZR 17 | 190/50 ZR 17 |
|---|---|---|
| H | 106mm | 112.5mm |
| H₂ | 65.6mm | 67.8mm |
| H₂/H | 0.62 | 0.60 |
| L₀ | 56.2mm | 60.7mm |
| L₁ | 34.8mm | 36.3mm |
| L₂ | 63.9mm | 67.5mm |
| L₃ | 71.5mm | 75.2mm |
| L | 91mm | 97mm |
| L₀/L | 0.62 | 0.63 |
| Epaisseur couche C₃ | 0.94M | 0.94M |
| Angle A₁ | 82° | 82° |
| Angle A₃ à l'extrémité E₂ | 64° | 62° |
| Angle A₃ à l'extrémité E₄ | 74° | 74° |
| Volume C₁ | 1050cm3 | 1133cm3 |
| Volume C₂ | 432cm3 | 448cm3 |
| Volume C₁/volume total | 70.85% | 71.66% |

Dans cette dimension d'étude, les renforts de la couche de carcasse retournée sont en polyester, alors que les renforts de la couche de sommet circonférentielle sont en aramide.

La rigidité de dérive de cette dimension a été comparée aux rigidités de dérive respectives d'une première dimension de référence R₁ et d'une deuxième dimension de référence R₂. La première dimension de référence R₁ comprend une armature de carcasse, constituée d'une unique couche de carcasse à 90°, et une armature de sommet, constituée d'une unique couche de sommet circonférentielle. La référence R₁ est la référence pour la stabilité ligne droite. La deuxième dimension de référence R₂ comprend une armature de carcasse, constituée de deux couches de carcasse à 65° croisées, et une armature de sommet, constituée d'une unique couche de sommet circonférentielle. La référence R₂ est la référence pour la stabilité en courbe.

Les résultats obtenus sont présentés dans le tableau II ci-dessous :

**Tableau II**

| | Référence R₁ | Référence R₂ | Invention |
|---|---|---|---|
| Rigidité de dérive à angle de carrossage nul | 100 | 110 | 100 |
| Rigidité de dérive à angle de carrossage égal à 30° | 100 | 120 | 130 |

La dimension d'étude présente des niveaux de rigidités de dérive au moins équivalents à la référence la plus performante, selon que l'on est en ligne droite à carrossage nul ou en courbe à fort carrossage. Elle présente une rigidité de dérive plutôt faible en ligne droite et plutôt élevée en courbe.

L'invention ne doit pas être comprise comme étant limitée à la description des exemples ci-dessus et s'étend notamment à des pneumatiques tels qué definis dans la revendication 1.

## Revendications

1. Pneumatique (1) pour véhicule motorisé à deux roues de type motocyclette comprenant :
a. une bande de roulement (2), de demi largeur L, reliée par deux flancs (3) à deux bourrelets (4), ladite bande de roulement comprenant une première composition élastomère et une seconde composition élastomère,
b. une armature de sommet (5), radialement intérieure à la bande de roulement (2), comprenant une couche de sommet comprenant des renforts circonférentiels, parallèles entre eux, enrobés d'une composition élastomère et formant un angle sensiblement nul et au plus égal à 5° par rapport à la direction circonférentielle,
c. une armature de carcasse (6), radialement intérieure à l'armature de sommet (5), comprenant un retournement (8) et ayant une épaisseur M :
- l'armature de carcasse (6) comprenant des renforts parallèles entre eux enrobés d'une composition élastomère, et s'enroulant, dans chaque bourrelet (4), de l'intérieur vers l'extérieur du pneumatique autour d'une tringle (7), pour former le retournement (8) comprenant une extrémité libre E₂,
- une couche de composition élastomère de découplage (C3) étant disposée entre l'armature de carcasse radialement intérieure et le retournement de l'armature de carcasse et s'étendant à partir d'une extrémité E₁ radialement extérieure jusqu'à une extrémité E₃,
- l'armature de carcasse (6) comprenant une portion sommitale (611) et une portion latérale (612),
- la portion sommitale (611) s'étendant axialement entre la première extrémité E₂ et une deuxième extrémité E'₂, E₂ et E'₂ étant symétriques par rapport au plan équatorial P du pneumatique,
- la portion latérale (612) s'étendant symétriquement par rapport au plan équatorial P radialement vers l'intérieur, à partir de l'extrémité E₂ jusqu'à une quatrième extrémité E₄ disposée au niveau de la tringle,
- dans la portion latérale, les renforts de l'armature de carcasse axialement intérieure formant avec la direction circonférentielle un angle A₃ compris entre 55° et 70° à l'extrémité E₂ croissant jusqu'à un angle compris entre 70 et 80° à l'extrémité E₄, les renforts de l'armature de carcasse axialement extérieure formant un angle A₄ de même valeur absolue mais de signe opposé à l'angle A₃,
- la portion sommitale (611) comprenant une première partie centrale, symétrique par rapport au plan équatorial, qui s'étend de l'extrémité E₁ radialement extérieure à l'extrémité E₂ jusqu'audit plan équatorial, ladite première partie centrale comprenant des renforts formant avec la direction circonférentielle un angle A₁ sensiblement constant supérieure à 80°,
- la portion sommitale (611) comprenant une seconde partie latérale qui s'étend, de manière symétrique par rapport au plan équatorial, de l'extrémité E₁ jusqu'à l'extrémité E₂, ladite seconde partie latérale comprenant des renforts formant avec la direction circonférentielle un premier angle supérieur à 80° à l'extrémité E₁ et un second angle compris entre 55 et 70° à l'extrémité E₂ tel que le premier angle et le second angle forment entre eux un écart d'angle A₂ supérieur ou égale à 15°,
**caractérisé en ce que** l'armature de carcasse comprend une composition élastomère présentant un module de rigidité MA10 à 10% d'élongation compris entre 9 et 15MPa et un module de rigidité MA100 à 100% d'élongation compris entre 4 et 7MPa, **et en ce que** l'extrémité E₃ de la couche de composition élastomère de découplage (C3) est radialement intérieure à l'extrémité E₂ et radialement extérieure à l'extrémité E₄, de telle manière que l'extrémité E₂ soit équidistante des extrémités E₁ et E₃, ladite composition élastomère de découplage présentant un module de rigidité MA10, à 10% d'élongation, compris entre 3 et 7MPa, et un module de rigidité MA100, à 100% d'élongation, compris entre 1.5 et 4MPa, le module de rigidité étant le module d'extension sécant obtenu en traction selon la norme ASTM D 412 de 1998, éprouvette "C".

2. Pneumatique (1) selon la revendication 1, **dans lequel** la bande de roulement comprend une première partie P₁ et une seconde partie P₂ juxtaposées en une cinquième extrémité E₅ commune auxdites parties, lesdites parties P₁ et P₂ étant disposées symétriquement par rapport au plan équatorial, ladite première partie P₁ étant centrale et ayant une demi-largeur axiale L₀ comprise entre le plan équatorial P et l'extrémité E₅ au moins égale (0.55)L et au plus égal (0.8)L et comprenant une première couche de composition élastomère centrale C₁, ladite seconde partie étant latérale et ayant une demi-largeur L₁ disposée entre l'extrémité E₅ et l'extrémité axiale de la grosseur boudin nominale L et comprise entre L-L₀ et comprenant la première couche de composition élastomère C₁ radialement intérieure à une seconde couche de composition élastomère C₂.

3. Pneumatique (1) selon la revendication 1, **dans lequel** la première couche de composition élastomère C₁ présente un module de rigidité MA10 à 10% d'élongation compris entre 3.5 et 5 MPa et un module de rigidité MA100 à 100% d'élongation compris entre 1 et 1.7 MPa.

4. Pneumatique (1) selon la revendication 1, **dans lequel** la seconde couche de composition élastomère C₂ présente un module de rigidité MA10 à 10% d'élongation compris entre 2.5 et 4 MPa et un module de rigidité MA100 à 100% d'élongation compris entre 1 et 1.3 MPa.

5. Pneumatique (1) selon l'une des revendications 2 à 4, **dans lequel** la première couche de composition élastomère C₁ sur les deux parties P₁ et P2 représente entre 0.65 et 0.8 fois le volume complet de la bande de roulement 2.

6. Pneumatique (1) selon la revendication 1, **dans lequel** la couche de composition élastomère de découplage C₃ a une épaisseur supérieure à 0.7M.

7. Pneumatique (1) selon la revendication 1, **dans lequel** la portion sommitale (611) a une largeur axiale (L₃) au moins égale à 0.7 fois et au plus égale à 0.85 fois la largeur axiale (L) de la demi bande de roulement (2).

8. Pneumatique (1) selon la revendication 1 **dans lequel** l'angle (A₃), formé, avec la direction circonférentielle (X), par les renforts de la portion latérale (612), croît à partir d'un angle minimal, compris entre 55° et 70° à l'extrémité E₂, jusqu'à un angle maximal, compris entre 70° et 80° à l'extrémité E₄.

9. Pneumatique (1) selon la revendication 1, **dans lequel** la portion latérale (612) a une hauteur radiale (H₂), H₂ étant la hauteur radiale entre les extrémités E₂ et le point de l'extrémité du bourrelet le plus radialement intérieur, au moins égale à 0.55 fois et au plus égale à 0.65 fois la hauteur (H) de la section méridienne du pneumatique.

10. Pneumatique (1) selon la revendication 1 **dans lequel** les renforts de l'armature de carcasse (6) sont en textile, de préférence en polyester ou en nylon.

11. Pneumatique (1) selon la revendication 1 **dans lequel** les renforts de l'armature de sommet (5) sont en textile, de préférence en aramide.

## Patentansprüche

1. Reifen (1) für ein motorisiertes Zweiradfahrzeug vom Typ eines Motorrads, welcher umfasst:
a. einen Laufstreifen (2) mit einer halben Breite L, der über zwei Seitenwände (3) mit zwei Wülsten (4) verbunden ist, wobei der Laufstreifen eine erste Elastomerzusammensetzung und eine zweite Elastomerzusammensetzung umfasst,
b. eine Scheitelbewehrung (5), die radial innerhalb des Laufstreifens (2) angeordnet ist und eine Scheitellage umfasst, welche Umfangsfestigkeitsträger umfasst, die zueinander parallel sind, von einer Elastomerzusammensetzung umhüllt sind und einen Winkel in Bezug auf die Umfangsrichtung bilden, der im Wesentlichen null und höchstens gleich 5° ist,
c. eine Karkassenbewehrung (6), die radial innerhalb der Scheitelbewehrung (5) angeordnet ist, einen Umschlag (8) umfasst und eine Dicke M aufweist,
- wobei die Karkassenbewehrung (6) zueinander parallele Festigkeitsträger umfasst, die von einer Elastomerzusammensetzung umhüllt sind und in jedem Wulst (4) von der Innenseite zur Außenseite des Reifens um einen Wulstkern (7) herumgeführt sind, um den Umschlag (8) zu bilden, der ein freies Ende E₂ umfasst,
- wobei eine Schicht aus einer Entkopplungs-Elastomerzusammensetzung (C3) zwischen der radial inneren Karkassenbewehrung und dem Umschlag der Karkassenbewehrung angeordnet ist und sich von einem radial äußeren Ende E₁ bis zu einem Ende E₃ erstreckt,
- wobei die Karkassenbewehrung (6) einen Scheitelabschnitt (611) und einen seitlichen Abschnitt (612) umfasst,
- wobei sich der Scheitelabschnitt (611) axial zwischen dem ersten Ende E₂ und einem zweiten Ende E'₂ erstreckt, wobei E₂ und E'₂ symmetrisch bezüglich der Äquatorialebene P des Reifens sind,
- wobei sich der seitliche Abschnitt (612) symmetrisch bezüglich der Äquatorialebene P von dem Ende E₂ bis zu einem vierten Ende E₄, das am Wulstkern angeordnet ist, radial nach innen erstreckt,
- wobei in dem seitlichen Abschnitt die Festigkeitsträger der axial inneren Karkassenbewehrung mit der Umfangsrichtung einen Winkel A₃ bilden, der am Ende E₂ zwischen 55° und 70° liegt und bis zu einem Winkel zwischen 70 und 80° am Ende E₄ wächst, während die Festigkeitsträger der axial äußeren Karkassenbewehrung einen Winkel A₄ mit demselben absoluten Betrag wie der Winkel A₃, jedoch mit entgegengesetztem Vorzeichen bilden,
- wobei der Scheitelabschnitt (611) einen in Bezug auf die Äquatorialebene symmetrischen ersten, mittleren Teil umfasst, welcher sich vom radial äußeren Ende E₁ bis zum Ende E₂ bis zur Äquatorialebene erstreckt, wobei der erste, mittlere Teil Festigkeitsträger umfasst, die mit der Umfangsrichtung einen im Wesentlichen konstanten Winkel A₁ bilden, der größer als 80° ist,
- wobei der Scheitelabschnitt (611) einen zweiten, seitlichen Teil umfasst, welcher sich symmetrisch in Bezug auf die Äquatorialebene vom Ende E₁ bis zum Ende E₂ erstreckt, wobei der zweite, seitliche Teil Festigkeitsträger umfasst, die mit der Umfangsrichtung einen ersten Winkel, der größer als 80° ist, am Ende E₁ und einen solchen zweiten Winkel zwischen 55 und 70° am Ende E₂ bilden, dass der erste Winkel und der zweite Winkel zwischen sich einen Winkelabstand A₂ aufweisen, der größer oder gleich 15° ist,
**dadurch gekennzeichnet, dass** die Karkassenbewehrung eine Elastomerzusammensetzung umfasst, die einen Steifigkeitsmodul MA10 bei 10 % Dehnung zwischen 9 und 15 MPa und einen Steifigkeitsmodul MA100 bei 100 % Dehnung zwischen 4 und 7 MPa aufweist, und dadurch, dass sich das Ende E₃ der Schicht aus Entkopplungs-Elastomerzusammensetzung (C3) radial innerhalb des Endes E₂ und radial außerhalb des Endes E₄ befindet, derart, dass das Ende E₂ äquidistant von den Enden E₁ und E₃ ist, wobei die Entkopplungs-Elastomerzusammensetzung einen Steifigkeitsmodul MA10 bei 10 % Dehnung zwischen 3 und 7 MPa und einen Steifigkeitsmodul MA100 bei 100 % Dehnung zwischen 1,5 und 4 MPa aufweist, wobei der Steifigkeitsmodul der bei Zugbeanspruchung erhaltene Sekantendehnungsmodul gemäß der Norm ASTM D 412 von 1998, Prüfling "C", ist.

2. Reifen (1) nach Anspruch 1, wobei der Laufstreifen einen ersten Teil P₁ und einen zweiten Teil P₂ umfasst, die in einem fünften Ende E₅, das den Teilen gemeinsam ist, nebeneinander angeordnet sind, wobei die Teile P₁ und P₂ symmetrisch in Bezug auf Äquatorialebene angeordnet sind, wobei der erste Teil P₁ ein mittlerer Teil ist und eine halbe axiale Breite L₀ zwischen der Äquatorialebene P und dem Ende E₅ aufweist, die mindestens gleich (0,55)L und höchstens gleich (0,8)L ist, und eine erste, mittlere Schicht aus Elastomerzusammensetzung C₁ umfasst, wobei der zweite Teil ein seitlicher Teil ist und eine halbe Breite L₁ aufweist, die zwischen dem Ende E₅ und dem axialen Ende der Nennquerschnittsbreite L angeordnet ist und gleich L-L₀ ist, und die erste Schicht aus Elastomerzusammensetzung C₁ radial innerhalb einer zweiten Schicht aus Elastomerzusammensetzung C₂ umfasst.

3. Reifen (1) nach Anspruch 1, wobei die erste Schicht aus Elastomerzusammensetzung C₁ einen Steifigkeitsmodul MA10 bei 10 % Dehnung zwischen 3,5 und 5 MPa und einen Steifigkeitsmodul MA100 bei 100 % Dehnung zwischen 1 und 1,7 MPa aufweist.

4. Reifen (1) nach Anspruch 1, wobei die zweite Schicht aus Elastomerzusammensetzung C₂ einen Steifigkeitsmodul MA10 bei 10 % Dehnung zwischen 2,5 und 4 MPa und einen Steifigkeitsmodul MA100 bei 100 % Dehnung zwischen 1 und 1,3 MPa aufweist.

5. Reifen (1) nach einem der Ansprüche 2 bis 4, wobei die erste Schicht aus Elastomerzusammensetzung C₁ auf den zwei Teilen P1 und P2 das 0,65- bis 0,8-Fache des Gesamtvolumens des Laufstreifens (2) darstellt.

6. Reifen (1) nach Anspruch 1, wobei die Schicht aus Entkopplungs-Elastomerzusammensetzung C₃ eine Dicke aufweist, die größer als 0,7M ist.

7. Reifen (1) nach Anspruch 1, wobei der Scheitelabschnitt (611) eine axiale Breite (L₃) aufweist, die mindestens gleich dem 0,7-Fachen und höchstens gleich dem 0,85-Fachen der axialen Breite (L) des halben Laufstreifens (2) ist.

8. Reifen (1) nach Anspruch 1, wobei der Winkel (A₃), der von den Festigkeitsträgern des seitlichen Abschnitts (612) mit der Umfangsrichtung (X) gebildet wird, von einem minimalen Winkel, der zwischen 55° und 70° am Ende E₂ liegt, bis zu einem maximalen Winkel, der zwischen 70° und 80° am Ende E₄ liegt, wächst.

9. Reifen (1) nach Anspruch 1, wobei der seitliche Abschnitt (612) eine radiale Höhe (H₂) aufweist, wobei H₂ die radiale Höhe zwischen den Enden E₂ und dem radial innersten Punkt des Endes des Wulstes ist, die mindestens gleich dem 0,55-Fachen und höchstens gleich dem 0,65-Fachen der Höhe (H) des Meridianschnitts des Reifens ist.

10. Reifen (1) nach Anspruch 1, wobei die Festigkeitsträger der Karkassenbewehrung (6) aus Textilmaterial bestehen, vorzugsweise aus Polyester oder aus Nylon.

11. Reifen (1) nach Anspruch 1, wobei die Festigkeitsträger der Scheitelbewehrung (5) aus Textilmaterial bestehen, vorzugsweise aus Aramid.

## Claims

1. Tire (1) for a motorized two-wheeled vehicle of the motorcycle type comprising:
a. a tread (2), of half width L, connected by two sides (3) to two beads (4), said tread comprising a first elastomer composition and a second elastomer composition,
b. a crown reinforcement (5), radially internal to the tread (2), comprising a crown layer comprising circumferential reinforcements, parallel to each other, coated with an elastomer composition and forming a substantially zero angle and at most equal to 5 ° with respect to the circumferential direction,
c. a carcass reinforcement (6), radially internal to the crown reinforcement (5), comprising a turnup (8) and having a thickness M:
- the carcass reinforcement (6) comprising parallel reinforcements to each other, coated with an elastomeric composition, and winding, in each bead (4), from the inside to the outside of the tire around a bead wire (7), to form the upturn (8) comprising a free end E2,
- a layer of elastomeric decoupling composition (C3) being disposed between the radially inner carcass reinforcement and the turnup of the carcass reinforcement and extending from a radially external end E1 to an end E3,
- the carcass reinforcement (6) comprising a top portion (611) and a side portion (612),
- the top portion (611) extending axially between the first end E2 and a second end E'2, E2 and E'2 being symmetrical with respect to the equatorial plane P of the tire,
- the lateral portion (612) extending symmetrically with respect to the equatorial plane P radially inwards, from the end E2 to a fourth end E4 located at the bead wire,
- in the lateral portion, the reinforcements of the axially inner carcass reinforcement forming with the circumferential direction an angle A3 between 55 ° and 70 ° at the end E2 increasing to an angle between 70 and 80 ° at the end E4, the reinforcements of the axially outer carcass reinforcement forming an angle A4 of the same absolute value but of opposite sign to the angle A3,
- the top portion (611) comprising a first central part, symmetrical with respect to the equatorial plane, which extends from the end E1 radially external to the end E2 up to said equatorial plane, said first central part comprising reinforcements forming with the circumferential direction a substantially constant angle A1 greater than 80 °,
- the top portion (611) comprising a second lateral part which extends, symmetrically with respect to the equatorial plane, from the end E1 to the end E2, said second lateral part comprising reinforcements forming with the direction circumferential a first angle greater than 80 ° at the end E1 and a second angle between 55 and 70 ° at the end E2 such that the first angle and the second angle form between them an angle difference A2 greater than or equal to 15 °,
**characterized in that** the carcass reinforcement comprises an elastomer composition having a rigidity modulus MA10 at 10% elongation between 9 and 15MPa and a rigidity modulus MA100 at 100% elongation between 4 and 7MPa, **and in that** the end E3 of the layer of elastomeric decoupling composition (C3) is radially inside at the end E2 and radially outside at the end E4, so that the end E2 is equidistant from the ends E1 and E3, said elastomeric decoupling composition having a rigidity modulus MA10, at 10% elongation, between 3 and 7MPa, and a rigidity modulus MA100, at 100% elongation, between 1.5 and 4MPa, the rigidity modulus being the secant extension modulus obtained in traction according to standard ASTM D412 of 1998, test piece "C".

2. Tyre (1) according to Claim 1, wherein the tread comprises a first part P1 and a second part P2 that are juxtaposed at a fifth end E5 common to said parts, said parts P1 and P2 being disposed symmetrically with respect to the equatorial plane, said first part P1 being central and having an axial half-width L0, between the equatorial plane P and the end E5, at least equal to (0.55)L and at most equal to (0.8)L, and comprising a central first layer of elastomer composition C1, said second part being lateral and having a half-width L1 disposed between the end E5 and the axial end of the nominal section width L and comprised between L-L0, and comprising the first layer of elastomer composition C₁ radially inside a second layer of elastomer composition C2.

3. Tyre (1) according to Claim 1, **wherein** the first layer of elastomer composition C1 has a modulus of rigidity MA10 at 10% elongation of between 3.5 and 5 MPa and a modulus of rigidity MA100 at 100% elongation of between 1 and 1.7 MPa.

4. Tyre (1) according to Claim 1, **wherein** the second layer of elastomer composition C2 has a modulus of rigidity MA10 at 10% elongation of between 2.5 and 4 MPa and a modulus of rigidity MA100 at 100% elongation of between 1 and 1.3 MPa.

5. Tyre (1) according to one of Claims 2 to 4, wherein the first layer of elastomer composition C1 on the two parts P1 and P2 represents between 0.65 and 0.8 times the complete volume of the tread 2.

6. Tyre (1) according to Claim 1, wherein the layer of uncoupling elastomer composition C3 has a thickness greater than 0.7 M.

7. Tyre (1) according to Claim 1, wherein the crown portion (611) has an axial width (L3) at least equal to 0.7 times and at most equal to 0.85 times the axial width (L) of the half-tread (2).

8. Tyre (1) according to Claim 1 wherein the angle (A3) formed with the circumferential direction (X) by the reinforcers of the lateral portion (612) increases from a minimum angle of between 55° and 70° at the end E2 to a maximum angle of between 70° and 80° at the end E4.

9. Tyre (1) according to Claim 1, wherein the lateral portion (612) has a radial height (H2), H2 being the radial height between the ends E2 and the radially innermost point of the end of the bead, at least equal to 0.55 times and at most equal to 0.65 times the height (H) of the meridian section of the tyre.

10. Tyre (1) according to Claim 1 wherein the reinforcers of the carcass reinforcement (6) are made of textile, preferably polyester or nylon.

11. Tyre (1) according to Claim 1 wherein the reinforcers of the crown reinforcement (5) are made of textile, preferably aramid.
